# EUROPEAN PATENT SPECIFICATION

(11) **EP 0 502 440 B1**
(45) Date of publication and mention of the grant of the patent: **10.12.2003**
(21) Application number: 92103459.1
(22) Date of filing: 28.02.1992
(51) Int. Cl.: G06K 7/10, G06K 19/06

(54) **Bar-code reading apparatus and method**
Gerät und Verfahren zur Streifenkodelesung
Appareil et méthode de lecture de code à barres

(30) Priority: 04.03.1991 JP 3762491; 06.03.1991 JP 3975591
(43) Date of publication of application: 09.09.1992
(60) Divisional application: 94117849.3
(73) Proprietor: FUJITSU LIMITED, Kawasaki-shi, Kanagawa 211 (JP)
(72) Inventor: Watanabe, Mitsuo, c/o FUJITSU LIMITED, Kawasaki-shi, Kanagawa 211 (JP); Kawai, Hiroaki, c/o FUJITSU LIMITED, Kawasaki-shi, Kanagawa 211 (JP)
(74) Representative: Stebbing, Timothy Charles

(56) References cited:
- EP-A- 0 250 778
- EP-A- 0 304 146
- EP-A- 0 390 162
- GB-A- 2 166 574
- US-A- 4 973 829

## Description

The present invention relates to a bar-code reading apparatus and method.

A bar-code reader, which reads product codes of alphanumeric characters represented by series of adjacent stripes of various widths, is widely used as a terminal of a point of sale (POS) system, for example.

A bar-code reader usually reads a bar code by scanning a laser beam over the bar code, measuring the widths of the black and white bars based on the light reflected and converting the bar widths into alphanumeric characters. A conventional bar-code reader is low in reading capacity because it is susceptible to so-called double-label errors (explained later) causing a reading failure. This can occur, for example, with so-called add-on bar codes as will now be explained.

To facilitate the management of sales by increasing the amount of product information recorded on a bar code, a bar-code system which has a normal bar code (below, a main-part bar code) followed by an additional bar code (below, an add-on bar code), is recently being put into practical use.

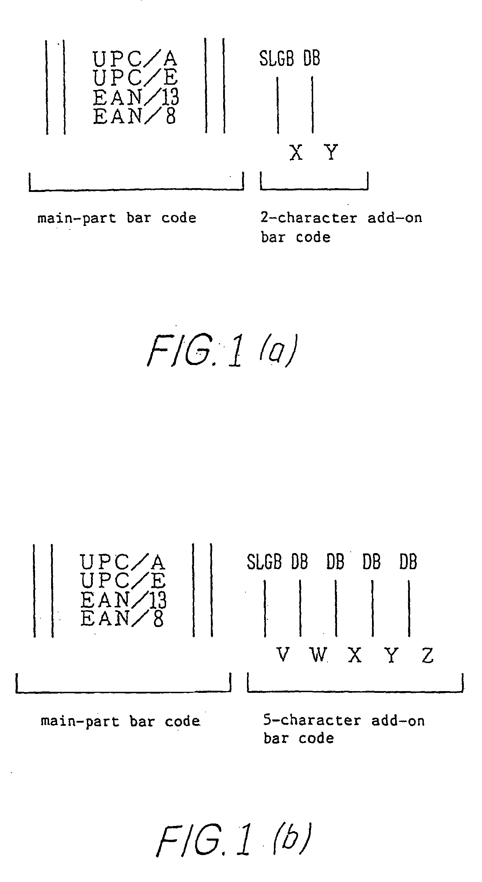

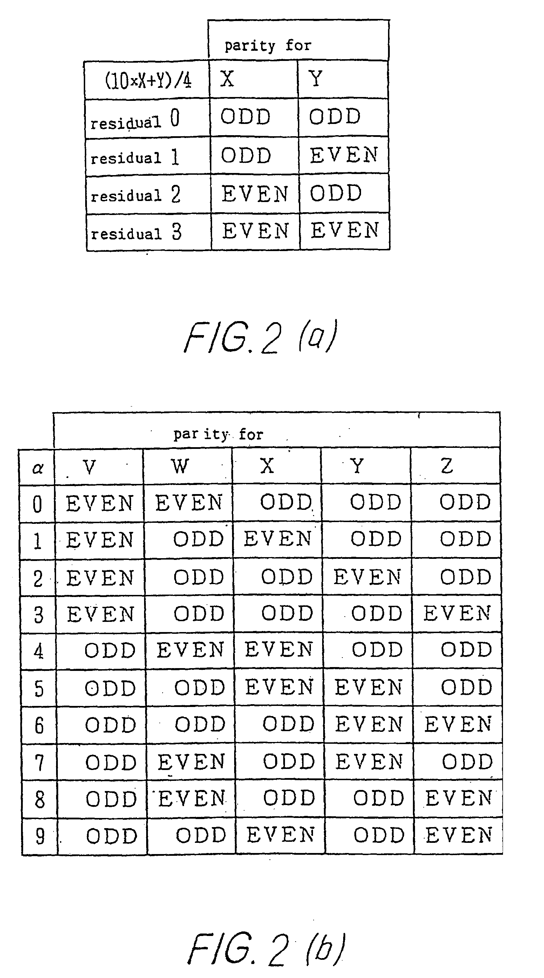

Fig. 1(a) shows a configuration of a bar code having a 2-character add-on bar code. Fig. 2(a) is an odd-even parity configuration table for a 2-character add-on bar code.

As shown in Fig. 1(a), a bar code having an add-on bar code is composed of a main part and an add-on part. The format of the main part is stipulated by such code system standards as UPC/A, UPC/E, EAN/13 and EAN/8. The 2-character add-on part includes a special left guard bar (SLGB), a first character labelled here as X, a delineate bar (DB) and a second character Y. X and Y are arbitrary alphanumeric characters, each carrying odd-even parity. The parity for the characters X and Y is determined, as shown in Fig. 2(a), by using the residual of a 2-digit decimal number XY divided by 4, where X and Y are the tens and unit digits, respectively.

Fig. 1(b) shows a configuration of a bar code having a 5-character add-on bar code. Fig. 2(b) is an odd-even parity configuration table for this add-on bar code.

As shown in Fig. 1(b), the 5-character add-on part includes a SLGB and a character followed by 4 pairs of a DB and a character, the characters being labelled V, W, X, Y and Z. The parity for the five characters is determined, as shown in Fig. 2(b), by using the unit digit ∝ obtained from the following calculation:-$\text{(V + X + Z) x 3 + (W + Y) x 9.}$

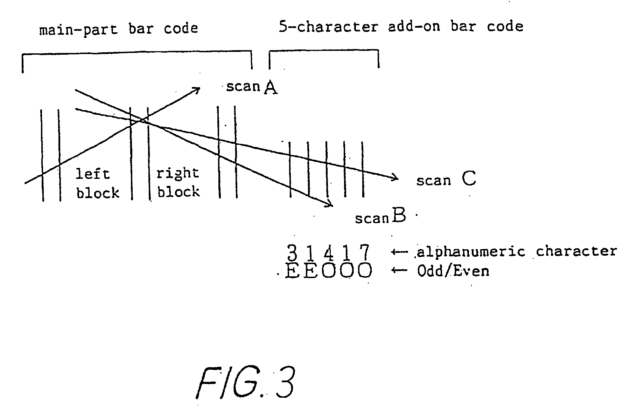

Fig. 3 shows laser beam scanning over a bar code.

Usually, a fixed-type bar-code reader scans a laser beam over the bar code several times, varying the direction of scanning, e.g. in the directions A, B and C as shown in Fig. 3. The bar-code reader reads the bar code for each different scanning direction, decodes the read code into alphanumeric characters and checks the characters for validity. The decoded bar code (including, if present, the add-on part, called add-on characters) is parity-checked based on the parity rule specified by the above calculation and a table like that in Fig. 2(a) or 2(b). If two or more sets of characters are read for the same bar code because of the different directions of scanning, a double-label error is recognised and the reading is regarded as a failure, even when the characters carry proper parity.

When a laser beam is scanned over a 5-character add-on bar code in the directions B and C, for example, different sets of 2 and 5 add-on characters respectively are read for that single bar code. Both sets of characters may conform to the above-mentioned parity rule because an add-on bar code has no stop code or the like. For the direction C, an add-on bar code having characters, e.g. E3, E1, O4, O1 and O7 is read (E and O represent even and odd parity respectively). For the direction B, only the characters E3 and E1 are read. The parity for remainder 3 of 31 divided by 4 is an Even/Even combination according to Fig. 2(a), which agrees with the parity accompanied by the characters read, E3 and E1. Thus, even when an add-on bar code is correctly read with proper parity, conventional bar-code readers determine this as a double-label error which is treated as a read failure, simply because two different sets of add-on characters are read for the same add-on bar code. This can also be a problem with other types of bar code apart from add-on bar codes.

As described above, a problem of a conventional bar-code reader is that it cannot read bar codes whose length is uncertain such as an add-on bar code whilst avoiding a double label error.

It is therefore desirable to provide a bar-code reader which can automatically read such bar codes properly, and with an improved reading capacity.

US-A-4 973 829 discloses a bar-code reading apparatus according to the preamble of claim 1, and a bar-code reading method according to the preamble of claim 7.

EP-A-0 390 162 discloses an apparatus for reading an add-on bar-code based on the detection of guard bars of the main bar-code.

According to a first aspect of the present invention, there is provided bar-code reading apparatus for scanning a single bar code a plurality of times, reading a plurality of sets of data over a plurality of scans, and decoding the read data into characters, characterised by: data check means for checking whether a plurality of sets of data of differing size have been read from the bar code; data comparison means for comparing the sets of read data in terms of data to an extent defined by the size of the smallest set of read data; parity comparison means for comparing the sets of read data in terms of parity to an extent defined by the smallest set of read data; and selecting means for selecting the set of data having the largest size in dependence upon the checking and comparison by said data check means, data comparison means, and parity comparison means, respectively.

According to a second aspect of the present invention; there is provided a bar-code reading method for scanning a single bar code a plurality of times, reading a plurality of sets of data over a plurality of scans, and decoding the read data into characters, the method characterised by steps of: checking whether a plurality of sets of data of differing size have been read from the bar code; comparing the sets of read data in terms of data to an extent defined by the size of the smallest set; comparing the sets of read data in terms of parity to an extent defined by the smallest set of read data; and selecting the largest set of read data in dependence upon the results of the checking step and the two comparing steps.

Thus, to avoid double-label errors, a bar-code reader embodying the invention determines whether a plurality of sets of bar code data (e.g. add-on characters) are read which differ in size (e.g. number of characters), compares the plurality of sets of data for equality in respect of both data content and parity, item by item, to the extent of the size (number of characters) in the smallest set, and, on a match, selects the set of data having the largest size as representing the bar code.

Reference is made, by way of example, to the accompanying drawings in which:-
Figs. 1(a) and (b) show a configuration of a bar code having a 2-character or 5-character add-on bar code, respectively;
Figs. 2 (a) and (b) are odd-even parity configuration tables for a 2-character or 5-character add-on bar code, respectively;
Fig. 3 shows laser beam scanning over a bar code;
Figs. 4(a) to (c) show configurations of bar codes having an add-on bar code, according to:-
   (a) UPC system,
   (b) UPC/A, EAN8 or EAN13 system, and
   (c) UPC/E system respectively;
Fig. 5 shows a relationship between a bar code configuration and laser beam scanning;
Fig. 6 is a block diagram of a bar code reading apparatus to which the present invention can be applied;
Fig. 7 is a detailed circuit of part of a bar-code decoder;
Fig. 8 is a flowchart explaining reading of an add-on bar code; and
Fig. 9 is a flowchart explaining how the reading capacity can be improved by the present invention.

Throughout the drawings, identical reference numerals are used to designate the same or similar component parts.

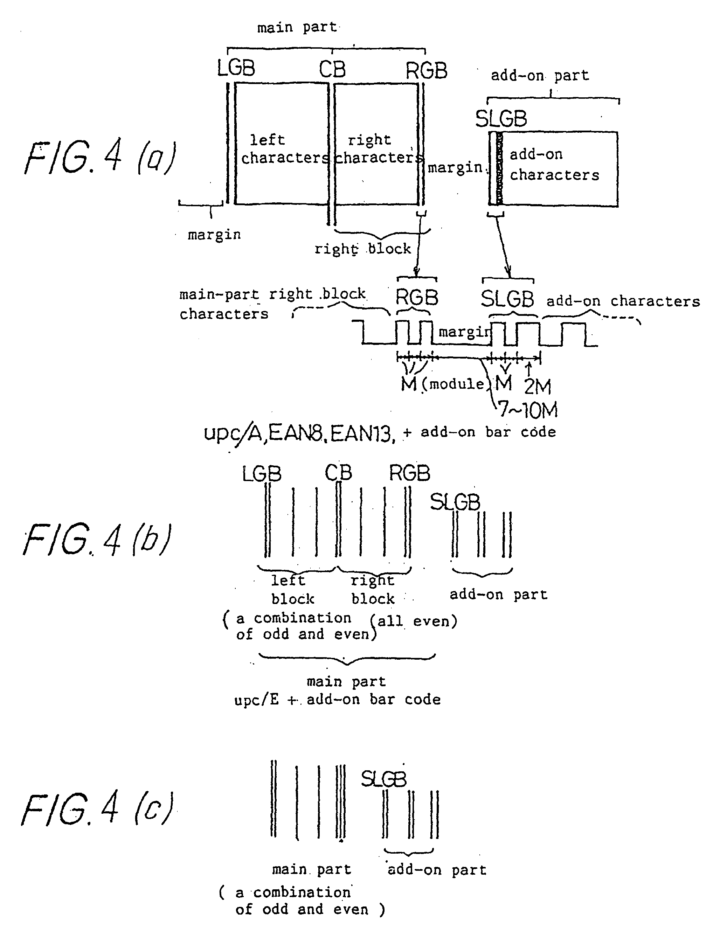

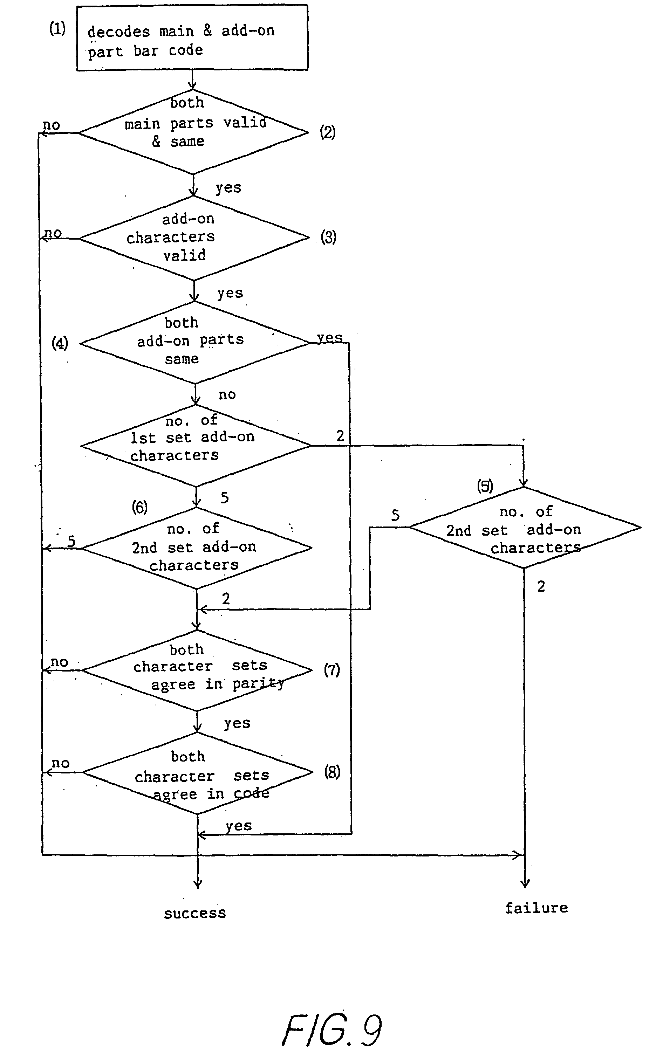

First, the detection of an add-on bar code will be described with reference to Figs. 4 to 8, by way of background explanation. The present invention will be described later with reference to Figure 9.

Fig. 4(a) shows a configuration of a UPC system bar code having an add-on bar code.

The main-part bar code includes a margin, a left guard bar (LGB), left characters, centre bar (CB), right characters, a right guard bar (RGB) and another margin. The add-on part, which begins with a special left guard bar (SLGB), is recorded at a predesignated interval (or number of modules) after a right block (main-part right characters and RGB).

Fig. 4(b) shows a configuration of a UPC/A, EAN8 or EAN13 bar code having an add-on bar code.

In this case the bar code includes a margin, a left block (LGB and left characters), a CB, a right block (right characters and RGB), another margin and an add-on bar code (SLGB and add-on characters). It is stipulated that the characters in the right block should each carry even parity and those in the left block a combination of even and odd parity.

Fig. 4(c) shows a configuration of a UPC/E bar code having an add-on bar code.

The main part of a UPC/E bar code has only a single block. The add-on bar code is recorded some modules after the rightmost edge of the main part.

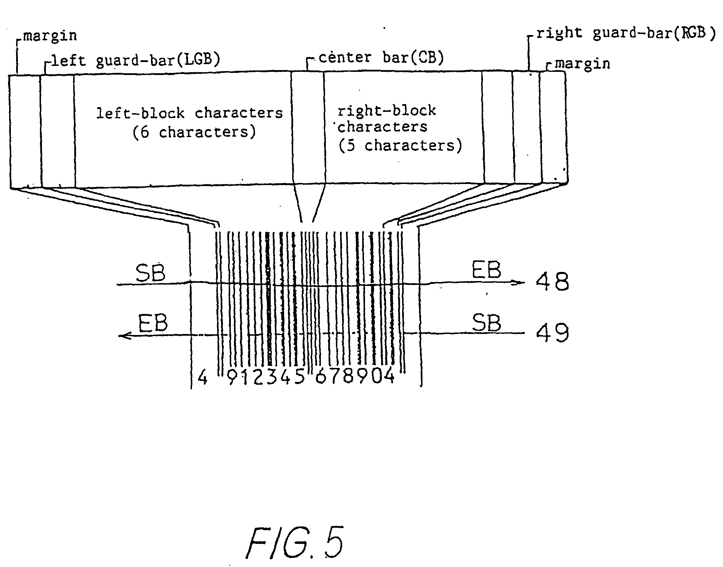

Fig. 5 shows a relationship between a bar code configuration and laser beam scanning.

The scanned beam crosses a start guard bar SB, centre guard bar CB, and end guard bar EB, which correspond to the LGB, CB and RGB in that order when the laser beam is scanned in the direction of the arrow 48, and to RGB, CB and LGB when scanned in the direction of the arrow 49.

Thus, which of the data blocks encountered by the laser beam is the right-hand block varies depending on the direction of laser beam scanning.

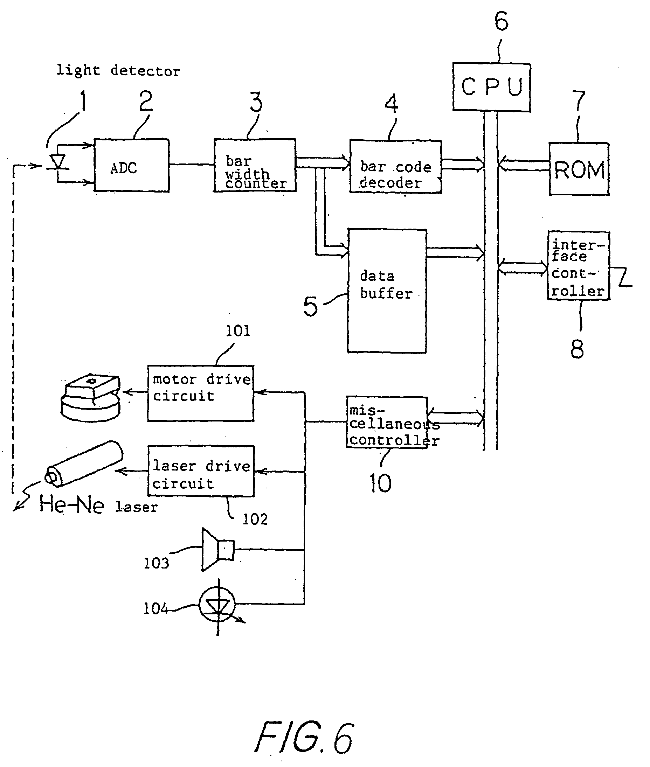

Fig. 6 is a block diagram of a bar code reading apparatus of a type to which the present invention can be applied.

A laser beam is irradiated from a helium-neon (He-Ne) laser, scanned over a bar code via a polygon mirror and reflected therefrom. A light detector 1 converts the intensity of the reflected light of the laser beam to an analog electrical signal. An analog-to-digital converter (ADC) 2 receives the analog signal from the light detector 1 and converts it to a digital signal. A bar-width counter 3 measures the width of white and black bars by counting the number of clocks occurring while the digital signal from the ADC 2 is "1" or "0" corresponding to the bar being black or white, and outputs (white- and black-) bar-width data based on the measured width of white and black bars.

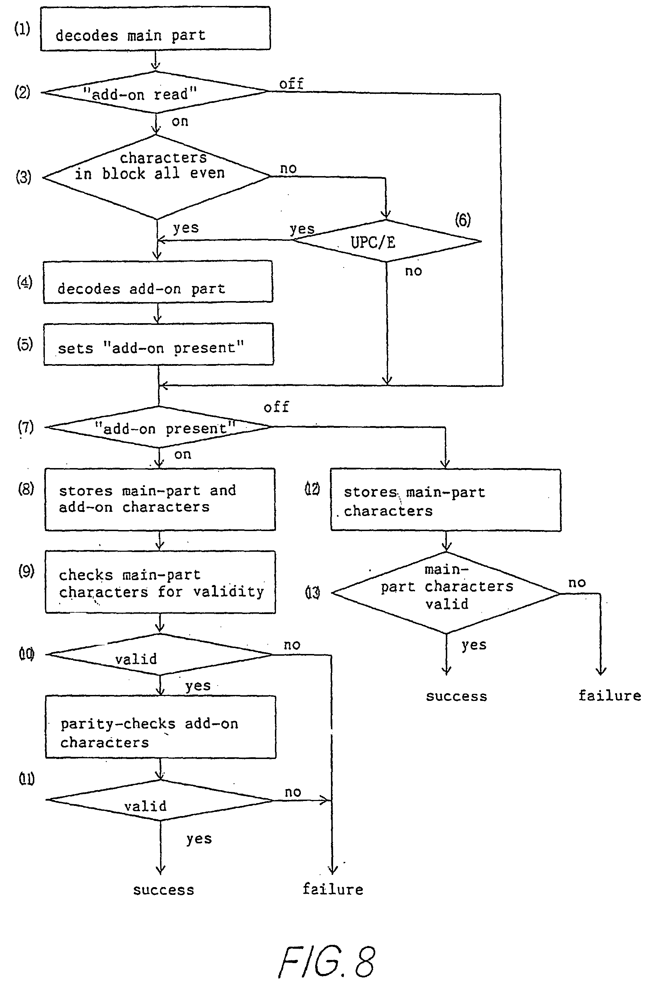

A bar-code decoder 4, which comprises circuits as shown in Fig. 2, detects the start guard bar SB, centre guard bar CB and end guard bar EB, generates pointer signals indicating the bar code type such as UPC/A, UPC/E, EAN13, EAN8 and decodes the bar code into alphanumeric characters. A data buffer 5 temporarily stores the characters decoded, which are later sent to a POS terminal, for example. A microprocessor unit (CPU) 6 performs the processing illustrated in the flowchart in Figs. 8 and 9, as instructed by a control program stored in a read-only-memory (ROM) 7.

An interface controller 8 controls communication with a POS terminal, for example, to send the data read from a bar code. A miscellaneous controller 10 controls a laser drive circuit 102 which drives a He-Ne laser, a motor drive circuit 101 which rotates a polygon mirror to produce a scanning laser beam, a speaker or buzzer 103 and a display indicator 104.

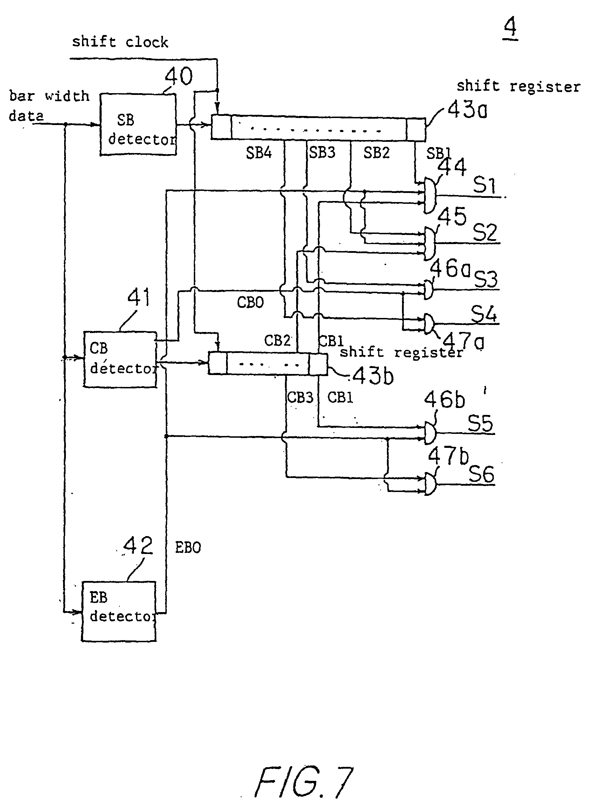

Fig. 7 is a detailed circuit of part of the bar-code decoder 4.

A start guard-bar detector (hereinafter called SB detector) 40, centre guard-bar detector (CB detector) 41 and end guard-bar detector (EB detector) 42 detect the SB, CB and EB, respectively (see Fig.5) and output detection data by decoding the bar width data from the bar width counter 3. The CB shows a symmetry between the left and right halves, irrespective of the direction of laser-beam scanning.

The SB is defined as a guard bar following a margin, and the EB as a guard bar followed by a margin. Therefore, when a laser beam is scanned along the arrow 48, the SB is the left guard bar (LGB) and the EB is the right guard bar (RGB); when a laser beam is scanned along the arrow 49, the SB is the right guard bar (RGB) and the EB is the left guard bar (LGB). Thus, the SB, CB and EB can be detected based on the bar-width data from the bar-width counter 3 in Fig. 7.

A shift register 43a inputs detection data from the SB detector 40 and right-shifts it in synchronisation with a shift clock, from the time when the SB detector 40 detects the SB. Similarly, a shift register 43b inputs detection data from the CB detector 41 and right-shifts it from the time when the CB detector 41 detects the CB.

AND gates 44 to 47b output pointer signals S1 to S6 respectively by ANDing any of signals SB1 to SB4, CB0 to CB3 and EB0. Signals CB0 and EB0 become active when the CB detector 41 and EB detector 42 detect the CB and EB, respectively, in the bar-width data from the bar-width counter 3. Signals SB1 to SB4 become active when the detection data of the SB input by the SB detector 40 is shifted to respective positions thereof in the shift register 43a. Signals CB1 to CB3 become active when the detection data of the CB input by the CB detector 41 is shifted to respective positions thereof in the shift register 43b.

The pointer signals S1 to S6 are generated as follows:-
(1) When the SB is detected by the SB detector 40, the shift register 43a starts shifting the detection data of the SB;
(2) When the CB is detected by the CB detector 41, the shift register 43b starts shifting the detection data of the CB;
(3) When the CB is detected, either S4 (an AND of CB0 and SB4) or S3 (an AND of CB0 and SB3) becomes active depending on which of SB4 and SB3 is active, i.e. depending on how far the detection data of the SB is shifted, which means whether the main bar code includes 4 or 6 characters respectively between the SB and CB;
(4) When the EB is detected by the EB detector 42, either S2 (an AND of EB0, CB2 and SB2) or S1 (an AND of EB0, CB1 and SB1) becomes active depending on whether the main bar code includes 8 or 12 characters respectively between the SB and EB. Similarly, either S6 (an AND of EB0 and CB3) or S5 (an AND of EB0 and CB1) becomes active depending on whether the main bar code includes 4 or 6 characters respectively, between the CB and EB.

Thus, pointer signals S1 to S6 are generated depending on the bar-code system in use (UPC/A, ENA 8-character, ENA 13-character and UPC/E). These pointer signals S1 to S6 are used to detect an add-on bar code following the main-part bar code, as described below.

Fig. 8 is a flowchart explaining how an add-on bar code is read.

In Fig. 8, the bar-code decoder 4 performs the following operations:-
(1) Decodes the main-part bar code. That is, the bar-code decoder 4 recognises a block of the main-part bar code (see Fig. 4(a)) based on the pointer signals S1 to S6 and converts the bar code into alphanumeric characters;
(2) Determines whether an "add-on read" flag is on.
   The flag is set by an operator using a key (not shown) provided on the bar-code reader, when an add-on bar code is desired to be read. When the flag is not on, the processing goes to step 7 without reading an add-on bar code;
(3) When the flag is on, determines whether the block concerned is a right (right-hand) block by checking whether all the characters within the block are even. It is stipulated that all the characters included in the right block should carry even parity. A character is defined to carry even parity when the number of modules constituting the black bars within the character is even;
(4) Decodes the add-on bar code. That is, when the block concerned is a right block (yes) or the UPC/E code system is used (see step (6)), the bar-code decoder 4 recognises a bar code which occurs a predetermined number (7 to 10) of modules after the right block as an add-on bar code, and decodes the add-on bar code into characters;
(5) Sets an "add-on present" flag, indicating that an add-on bar code has been decoded;
(6) When all the characters in the block are not even (no), the decoder 4 determines, based on the pointer signals S1 to S6, whether the code system used is the UPC/E, which has only a single block (without a right block). When the UPC/E code is used (yes), the processing goes to step (4); otherwise (no), i.e. when the block is a right block, to step (7);
(7) Determines whether the "add-on present" flag is set on;
(8) When the flag is on (yes), the decoder 4 stores the main-part and add-on characters in the data buffer 5;
(9) Checks the main-part characters for validity;
(10) When invalid (no), the reading is a failure;
(11) When the main-part characters are valid (yes), the decoder 4 parity-checks the add-on characters. When an error is detected (no), the reading is failure; otherwise (yes), a success;
(12) When the "add-on present" flag is not on (no), the decoder 4 stores the main-part characters in the data buffer 5;
(13) Checks the main-part characters for validity. When an error is detected (no), the reading is a failure; otherwise (yes), a success.

As described above, a bar code reading apparatus can read a main-part bar code, and detect the right block in the main-part characters. It can detect an add-on bar code a predetermined number of modules after the right block, read the add-on bar code and check the add-on characters for validity. Thus, the add-on bar code can be read automatically and properly in the same way as for a normal bar code having no add-on bar code.

An embodiment of the present invention, which can avoid a double-label error when reading bar codes, will now be described with reference to Fig. 9.

As shown in the flowchart of Fig. 9, an example of the method of the invention proceeds as follows:-
(1) A bar code having an add-on part is scanned with a laser beam in two directions (C and B in Fig. 3, for example) in a single read operation and decoded successively into a set of main-part and add-on characters for each scan. The two (first and second) sets of the main-part and add-on characters are each parity-checked;
(2) Unless both sets of the main-part characters agree with each other or have one each of left and right blocks whose characters carry proper parity, the reading is a failure;
(3) Unless both sets of the add-on characters carry a proper odd-even parity configuration shown in Figs. 2(a) and 2(b), the reading is a failure;
(4) When both sets of the add-on characters carry proper parity and agree with each other, the reading is a success;
(5) If both (first and second) sets of the add-on characters each include two characters, the reading is a failure;
(6) If both sets of the add-on characters each include five characters, the reading is a failure;
(7) Unless both sets of the add-on characters, the first set having 2 characters and the second 5 characters, agree with each other in the odd-even parity configuration for the first two characters, the reading is a failure;
(8) Unless both sets of the add-on characters, the first set having 2 characters and the second 5 characters, agree with each other in character code for the first two characters, the reading is a failure; otherwise, the reading is a success and the set having five add-on characters is taken as the bar code.

In the above example, such operations as determining, parity-checking and comparing are performed on decoded characters. Alternatively, the above operations can instead be performed on non-decoded bar-width data.

As described above, when a double-label error occurs which is caused by laser beam scanning in different directions and which conventional bar-code readers regard as a reading failure, a bar-code reader embodying the present invention enables a plurality of read sets of add-on characters to be compared in respect of the odd-even parity configuration and character code for the first several characters. When they agree, it takes as the bar code whichever set of add-on characters has the larger or largest number of characters, thus avoiding most double-label errors and increasing the reading capacity. This method of avoiding double-label errors is not necessarily restricted to add-on bar codes: it could be used for other bar codes whose length (number of modules or characters) is uncertain.

Although the above description refers to detection of "black" and "white" bars in a bar code, it will be understood that not all bar codes are actually black and white; therefore, the terms "black" and "white" in the description and claims are to be taken as including any colours which are relatively absorbing or relatively reflecting, respectively, of a scanned laser beam.

## Claims

1. Bar-code reading apparatus for scanning a single bar code a plurality of times, reading a plurality of sets of data over a plurality of scans, and decoding the read data into characters, **characterised by**:
data check means (4, 6) for checking whether a plurality of sets of data of differing size have been read from the bar code;
data comparison means (4, 6) for comparing the sets of read data in terms of data to an extent defined by the size of the smallest set of read data;
parity comparison means (4, 6) for comparing the sets of read data in terms of parity to an extent defined by the smallest set of read data; and
selecting means (4, 6) for selecting the set of data having the largest size in dependence upon the checking and comparison by said data check means, data comparison means, and parity comparison means, respectively.

2. Bar-code reading apparatus as claimed in claim 1, wherein said read data is in the form of bar-width data and the size of each set of data is a number of modules.

3. Bar-code reading apparatus as claimed in claim 1, wherein said read data is in the form of characters decoded from bar-width data and the size of each set of data is the number of characters therein.

4. Bar-code reading apparatus as claimed in claim 3, wherein said data comparison means (4, 6) and said parity comparison means (4, 6) compare the sets of read data for equality in character code and equality in parity respectively, character-by-character, for the number of characters in the smallest set.

5. Bar-code reading apparatus as claimed in any of claims 1 to 4, wherein said bar code is an add-on bar code provided in addition to a main-part bar code.

6. Bar-code reading apparatus as claimed in claims 4 and 5 combined, further comprising first main-part check means for parity-checking read characters in the main-part bar code, and second main-part check means for checking whether a plurality of sets of differing numbers of main-part characters have been read, wherein said selecting means is also responsive to the results of checking by said first and second main-part check means.

7. A bar-code reading method for scanning a single bar code a plurality of times, reading a plurality of sets of data over a plurality of scans, and decoding the read data into characters, the method **characterised by** steps of:
checking whether a plurality of sets of data of differing size have been read from the bar code;
comparing the sets of read data in terms of data to an extent defined by the size of the smallest set;
comparing the sets of read data in terms of parity to an extent defined by the smallest set of read data; and
selecting the largest set of read data in dependence upon the results of the checking step and the two comparing steps.

## Patentansprüche

1. Strichcodelesevorrichtung zum vielmaligen Scannen eines einzelnen Strichcodes, Lesen einer Vielzahl von Sätzen von Daten während einer Vielzahl von Scanvorgängen und Decodieren der gelesenen Daten in Zeichen, **gekennzeichnet durch**:
Datenprüfmittel (4, 6) zum Prüfen, ob eine Vielzahl von Sätzen von Daten mit verschiedener Größe von dem Strichcode gelesen worden ist;
Datenvergleichsmittel (4, 6) zum Vergleichen der Sätze von gelesenen Daten hinsichtlich Daten in einem Maße, das **durch** die Größe des kleinsten Satzes von gelesenen Daten definiert ist;
Paritätsvergleichsmittel (4, 6) zum Vergleichen der Sätze von gelesenen Daten hinsichtlich der Parität in einem Maße, das **durch** den kleinsten Satz von gelesenen Daten definiert ist; und
Selektionsmittel (4, 6) zum Selektieren des Satzes von Daten, der am größten ist, in Abhängigkeit von der Prüfung und dem Vergleich **durch** die Datenprüfmittel, die Datenvergleichsmittel bzw. die Paritätsvergleichsmittel.

2. Strichcodelesevorrichtung nach Anspruch 1, bei der die gelesenen Daten die Form von Strichbreiten-Daten haben und die Größe von jedem Satz von Daten eine Anzahl von Modulen ist.

3. Strichcodelesevorrichtung nach Anspruch 1, bei der die gelesenen Daten die Form von Zeichen haben, die aus Strichbreiten-Daten decodiert wurden, und die Größe von jedem Satz von Daten die Anzahl von Zeichen in ihm ist.

4. Strichcodelesevorrichtung nach Anspruch 3, bei der die Datenvergleichsmittel (4, 6) und die Paritätsvergleichsmittel (4, 6) die Sätze von gelesenen Daten auf Gleichheit des Zeichencodes bzw. Gleichheit der Parität vergleichen, Zeichen für Zeichen, für die Anzahl von Zeichen in dem kleinsten Satz.

5. Strichcodelesevorrichtung nach irgendeinem der Ansprüche 1 bis 4, bei der der Strichcode ein Zusatz-Strichcode ist, der zusätzlich zu einem Hauptteil-Strichcode vorgesehen ist.

6. Strichcodelesevorrichtung nach den Ansprüchen 4 und 5 in Kombination, ferner mit einem ersten Hauptteil-Prüfmittel zur Paritätsprüfung von gelesenen Zeichen in dem Hauptteil-Strichcode und einem zweiten Hauptteil-Prüfmittel zum Prüfen, ob eine Vielzahl von Sätzen mit verschiedenen Anzahlen von Hauptteil-Zeichen gelesen worden ist, bei der die Selektionsmittel auch auf die Resultate der Prüfung durch die ersten und zweiten Hauptteil-Prüfmittel reagieren.

7. Strichcodeleseverfahren zum vielmaligen Scannen eines einzelnen Strichcodes, Lesen einer Vielzahl von Sätzen von Daten während einer Vielzahl von Scanvorgängen und Decodieren der gelesenen Daten in Zeichen, welches Verfahren **gekennzeichnet ist durch** die folgenden Schritte:
Prüfen, ob eine Vielzahl von Sätzen von Daten mit verschiedener Größe von dem Strichcode gelesen worden ist;
Vergleichen der Sätze von gelesenen Daten hinsichtlich Daten in einem Maße, das **durch** die Größe des kleinsten Satzes definiert ist;
Vergleichen der Sätze von gelesenen Daten hinsichtlich der Parität in einem Maße, das **durch** den kleinsten Satz von gelesenen Daten definiert ist; und
Selektieren des größten Satzes von gelesenen Daten in Abhängigkeit von den Resultaten des Prüfschrittes und der zwei Vergleichsschritte.

## Revendications

1. Appareil de lecture de code à barres pour analyser un unique code à barres une pluralité de fois, lire une pluralité d'ensembles de données lors d'une pluralité d'analyses, et décoder les données lues en caractères, **caractérisé par** :
des moyens de contrôle de données (4, 6) pour contrôler si oui ou non une pluralité d'ensembles de données de différentes tailles ont été lues du code à barres ;
des moyens de comparaison de données (4, 6) pour comparer les ensembles de données lues en termes de données dans une mesure définie par la taille du plus petit ensemble de données lues ;
des moyens de comparaison de parité (4, 6) pour comparer les ensembles de données lues en termes de parité dans une mesure définie par le plus petit ensemble de données lues ; et
des moyens de sélection (4, 6) pour sélectionner l'ensemble de données possédant la taille la plus importante selon le contrôle et la comparaison par lesdits moyens de contrôle de données, les moyens de comparaison de données, et les moyens de comparaison de parité, respectivement.

2. Appareil de lecture de code à barres selon la revendication 1, dans lequel lesdites données lues sont des données sous forme de largeur de barre et la taille de chaque ensemble de données est un nombre de modules.

3. appareil de lecture de code à barres selon la revendication 1, dans lequel lesdites données lues sont sous la forme de caractères décodés à partir des données sous forme de largeur de barre et la taille de chaque ensemble de données est le nombre de caractères s'y trouvant.

4. Appareil de lecture de code à barres selon la revendication 3, dans lequel lesdits moyens de comparaison de données (4, 6) et lesdits moyens de comparaison de parité (4, 6) comparent les ensembles de données lues pour une égalité dans le code de caractère et une égalité en parité respectivement, caractère par caractère, pour le nombre de caractères dans le plus petit ensemble.

5. Appareil de lecture de code à barres selon l'une quelconque des revendications 1 à 4, dans lequel ledit code à barres est un code à barres supplémentaire prévu en plus du code à barres principal.

6. Appareil de lecture de code à barres selon les revendications 4 et 5 combinées, comprenant en outre des premiers moyens de contrôle de partie principale pour des caractères lus de contrôle de parité dans le code à barres principal, et des seconds moyens de contrôle de partie principale pour contrôler si oui ou non une pluralité d'ensembles de nombres différents de caractères de la partie principale ont été lus, dans lequel lesdits moyens de sélection sont également sensibles aux résultats du contrôle par lesdits premiers et seconds moyens de contrôle de partie principale.

7. Procédé de lecture de code à barres pour analyser un unique code à barres une pluralité de fois, lire une pluralité d'ensembles de données lors d'une pluralité d'analyses, et décoder les données lues en caractères, procédé **caractérisé par** les étapes consistant à :
contrôler si oui ou non une pluralité d'ensembles de données de différentes tailles ont été lues à partir du code à barres ;
comparer les ensembles de données lues en termes de données dans une mesure définie par la taille du plus petit ensemble ;
comparer les ensembles de données lues en termes de parité dans une mesure définie par le plus petit ensemble de données lues ; et
sélectionner le plus grand ensemble de données lues selon les résultats de l'étape de contrôle et des deux étapes de comparaison.
